# EUROPEAN PATENT APPLICATION

(11) **EP 1 787 829 A1**
(43) Date of publication of application: **23.05.2007**
(21) Application number: 05772549.1
(22) Date of filing: 10.08.2005
(51) Int. Cl.: B60C 17/06, C08L 9/00, C08K 5/098, C08L 61/06

(54) **TIRE WHEEL ASSEMBLY**

(30) Priority: 27.08.2004 JP 2004248304
(71) Applicant: THE YOKOHAMA RUBBER CO., LTD., Tokyo 105-8685 (JP)
(72) Inventor: HOTAKA, Takeshi, c/o THE YOKOHAMA RUBBER CO., LTD, Hiratsuka-shi, Kanagawa 254-8601 (JP); MORI, Makio, c/o THE YOKOHAMA RUBBER CO., LTD, Hiratsuka-shi, Kanagawa 254-8601 (JP)
(74) Representative: HOFFMANN EITLE
(86) International application number: PCT/JP2005/014963
(87) International publication number: WO 2006/022167

(57) **Abstract**

A run flat tire wheel assembly having a run flat support member formed by a ring-shaped metal shell and rubbery elastic members in an inside cavity of a tire/rim, wherein the rubbery elastic members are comprised of at least two types of rubber differing at least at the vicinity of the bonded parts with the ring-shaped metal shell and the other locations and wherein the vicinity of the bonded parts with the ring-shaped metal shell is formed with a directly bondable rubber elastic member.

## Description

### TECHNICAL FIELD

The present invention relates to a tire wheel assembly used for a pneumatic tire enabling limited driving in a damaged or deflated state (hereinafter referred to as a "run flat tire"), more specifically relates to an improved tire wheel assembly capable of improving the bondability of the contact parts of a ring-shaped metal shell and rubbery elastic members of a run flat support member comprised of a ring-shaped metal shell and rubbery elastic members provided at the inside cavity of the tire/rim and the rubbery elastic members, without using an adhesive.

### BACKGROUND ART

There is a need for a pneumatic run flat tire having an emergency driving capable of driving for a certain distance, even if the tire rapidly drops in the inside pressure due to its being punctured or bursting during driving of the automobile etc. Numerous proposals have been made to meet such a need. As such proposals, for example, Japanese Patent Publication (A) No. 10-297226 and Japanese Patent Publication (A1) No. 2001-519279 propose technology attaching a run flat support member (i.e., mandrel) on the rim at the inside cavity of the pneumatic tire and using this to support a punctured or otherwise damaged pneumatic tire to enable run flat driving.

The run flat support member has a ring-shaped member having the outer circumference as a support surface, has elastic rings attached to the two legs thereof, and has the support member supported on the rim through the elastic rings. Technology using the run flat support member enables use of the wheels/rims of conventional general pneumatic tires as they are, without making any special modifications to the wheels/rims, and therefore, has the advantage of enabling use of conventional pneumatic tire production, processing, and mounting facilities as they are.

Contrary to the above, as a typical method, there is also technology reinforcing the sidewalls to enable run flat driving, but this has the problem that sufficient performance cannot be exhibited in tire sizes with high tire cross-sectional heights. As technology providing a mandrel in the inside cavity of the tire as explained above, there is technology making the mandrel solid, but this has the problem that since the mandrel has no flexibility, it is difficult to mount. Further, there are proposals using special rim structures or special tire structures, but this has the problem that neither the tires nor the wheels have general applicability, and therefore an excessive burden is placed on the user.

However, technology using a run flat support member is superior in terms of general applicability and ease of mounting, but the bonding strength at the contact surfaces between the elastic rings and the ring-shaped member has a large effect on the durability of the run flat support member and greatly influences the durability. Therefore, to improve the durability of the run flat support member in the tire wheel assembly mounting a run flat support member and increase the run flat driving distance, it is necessary to improve the bondability between the back surface of the metal shell and the rubber elastic members of the support member and the durability thereof.

Various proposals have been made to increase the bonding strength between the metal shell and the rubbery elastic members from this viewpoint. For example, Japanese Patent Publication (A) No. 2004-074857 proposes bonding by an adhesive, Japanese Patent Publication (A) No. 2004-074855 bonding by electrolytic polymerization treatment, Japanese Patent Publication (A) No. 2004-074854 bonding by electrolytic polymerization and formulation of peroxide, and Japanese Patent Publication (A) No. 2004-106692 direct bonding by a high sulfur content and formulation of a resol-type alkyl phenol resin. In the technology of Japanese Patent Publication (A) No. 2004-106692, to improve the bonding between the ring-shaped metal shell (steel) and the rubber, the past practice of using an indirect binder or applying special surface treatment was replaced by making the rubber compound side a high sulfur formulation and resin formulation system so as to make the rubbery elastic members and the metal (steel) directly bondable. Further, as a method for making the metal and the rubbery elastic members directly bond, the techniques of formulating acetyl acetonate, formulating silica, or formulating iron naphthenate were developed. However, these rubber/metal directly bondable compounds suffer from the problems that inclusion of special compounding agents led to an increase in costs, the rubber stuck to the mold surface at the time of vulcanization molding, etc. This obstructed commercialization.

### DISCLOSURE OF THE INVENTION

Accordingly, the objects of the present invention are to improve the direct bondability of the ring-shaped metal shell and the rubbery elastic members forming the run flat support member of the run flat tire wheel assembly and to improve the durability and the run flat driving capability of the run flat support member.

In accordance with the present invention, there is provided a run flat tire wheel assembly comprising a run flat support member formed by a ring-shaped metal shell and rubbery elastic members in an inside cavity of a tire/rim, wherein the rubbery elastic members are comprised of at least two types of rubber differing at least at the vicinity of the bonded parts with the ring-shaped metal shell and at the other locations and wherein the vicinity of the bonded parts with the ring-shaped metal shell is formed with a directly bondable rubber elastic members.

In the present invention, the rubber forming the rubbery elastic members of the run flat support member is composed of a two-layer or greater structure. A rubber composition having a high sulfur and resol-type alkyl phenol resin formulation capable of bonding with rubber is arranged at the locations of the rubbery elastic members contacting the ring-shaped metal shell (contact parts) and their vicinity, while a rubber having a superior resistance to heat degradation is arranged at the other locations so as to realize both simplization of the production process and durability of the rubbery elastic members and, in turn, the run flat support member. Due to this, the volume of use of the directly bondable rubber having high bonding characteristics is reduced, and therefore it is possible to reduce the overall cost of the run flat support member and to suppress the problem of sticking, adhesion of rubber to the mold during vulcanization.

### BRIEF DESCRIPTION OF THE DRAWINGS

FIG. 1 is a cross-sectional view along the meridian direction showing principal parts of an embodiment of the tire wheel assembly of the present invention.
FIG. 2 is a cross-sectional view along the meridian direction showing principal parts of another embodiment of the tire wheel assembly of the present invention.
FIG. 3 is a cross-sectional view along the meridian direction showing principal parts of still another embodiment of the tire wheel assembly of the present invention.
FIG. 4 is a conceptual view showing the state of the vicinity of the bonded parts of a ring-shaped metal shell and rubbery elastic members of the tire wheel assembly of the present invention.
FIG. 5 is a view of an example of the bonding surfaces between the ring-shaped metal shell and the rubbery elastic members of the tire wheel assembly of the present invention.

### BEST MODE FOR CARRYING OUT THE INVENTION

The singular forms ("a", "an", and "the") used in the description and the attached claims should be understood as including the plural form unless otherwise clear from the context.

According to the present invention, it is possible to obtain a tire wheel assembly having improved direct bondability between the metal shell and the rubbery elastic members, without coating an organic solvent-based or other adhesive between the metal shell of the run flat support member formed with a high rigidity metal shell and the rubbery elastic members and the rubbery elastic members, more preferably, by securing a predetermined bonding area, it is possible to impart to the run flat support member a bonding strength sufficiently withstanding the load at the time of rim assembly or run flat driving.

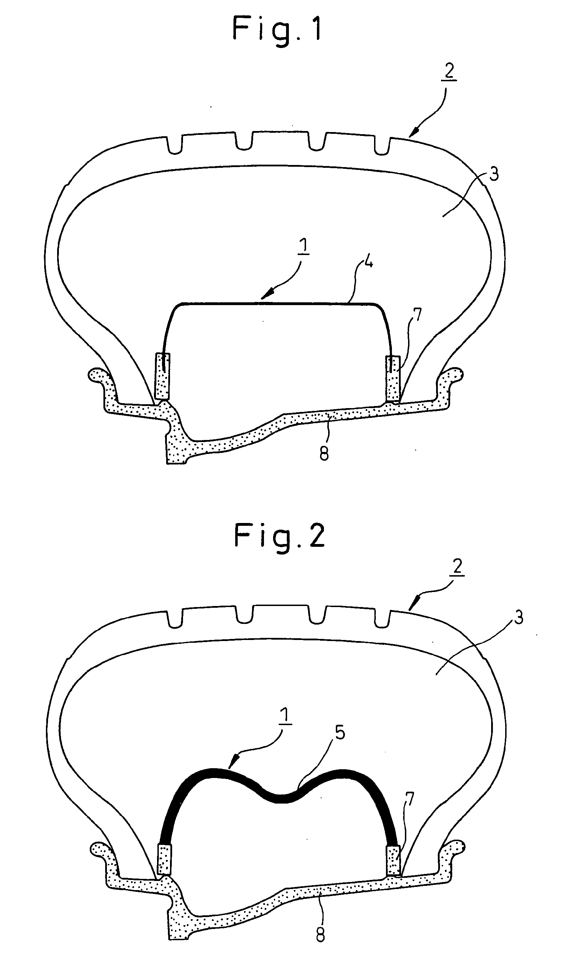

The present invention will now be explained more specifically by embodiments shown in the drawings. FIG. 1, FIG. 2 and FIG. 3 are cross-sectional views along the meridian direction showing principal parts of a typical embodiment of the tire wheel assembly of the present invention (wheels).

For example, as shown in FIG. 1, FIG. 2 and FIG. 3, the run flat support member 1 according to the present invention is formed from a ring-shaped metal shell 4, 5, or 6 inserted into a cavity 3 of a pneumatic tire 2 and rubbery elastic members 7. This run flat support member 1 is formed into a shape having an outside diameter smaller than the inside diameter of the cavity 3 so as to maintain a certain distance from the inside surface of the cavity 3 of the pneumatic tire 2 and with an inside diameter of substantially the same dimension as the inside diameter of the bead of the pneumatic tire. This run flat support member 1 is inserted inside the pneumatic tire 2 and in that state mounted over the rim 8 of the wheel together with the pneumatic tire 2 to thereby form the wheel assembly. If this tire wheel assembly is mounted on an automobile etc. and the pneumatic tire is punctured during driving, the punctured, collapsing tire 2 is supported at the outer circumference of the run flat support member 1 and run flat driving becomes possible in that state.

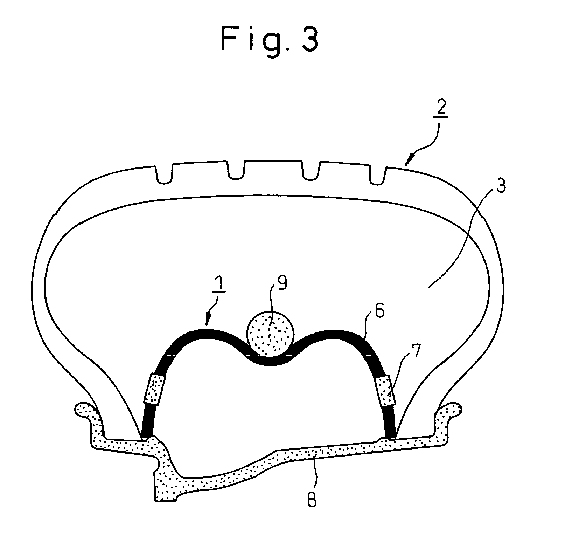

As explained above, the run flat support member of the tire wheel assembly of the present invention is comprised of a ring-shaped metal shell 4, 5 or 6 and rubbery elastic members 7. The ring-shaped metal shell 4, 5 or 6 forms a continuous support surface at the outside thereof so as to support a punctured or otherwise damaged tire and forms legs by the left thereof and right side walls at the inside. The outside support surface can be shaped in various ways. For example, a flat surface as shown in FIG. 1, a surface of a shape in the lateral cross-section perpendicularly intersecting the circumferential direction projecting outward as shown in FIG. 2 (surface having two projecting surfaces arranged in the axial direction of the tire as shown in FIG. 2 or a surface having three or more or a surface with just one), and further a shape comprised of two or more projecting surfaces and having a circular cross-section elastic ring 9 arranged in a recess to impart the capability to buffer the shock at the time of run flat driving as shown in FIG. 3 and/or separated from the ring-shaped metal shell with a rubbery elastic members so that the side walls of the metal shell directly abut against the rim and enable a stable engagement state to be maintained, etc. may be used.

In this way, even when forming a support surface, if raising the bonding between the metal and the rubbery elastic members according to the present invention, it is possible to increase the sustained tire run flat driving distance.

The rubbery elastic members 7 are attached to the ends of the two legs of the ring-shaped metal shell 4, 5 or 6 (see FIG. 1 or FIG. 2) or in the two legs (see FIG. 3) and support the ring-shaped metal shell 4, 5 or 6 by abutting against the left and right rims 8. The rubbery elastic members 7 are comprised of rubber, ease the impact or vibration received from the punctured or other damaged tire by the ring-shaped metal shell 4, 5 or 6, act to stop sliding with respect to the rim 8, and stably support the ring-shaped metal shell on the rim 8.

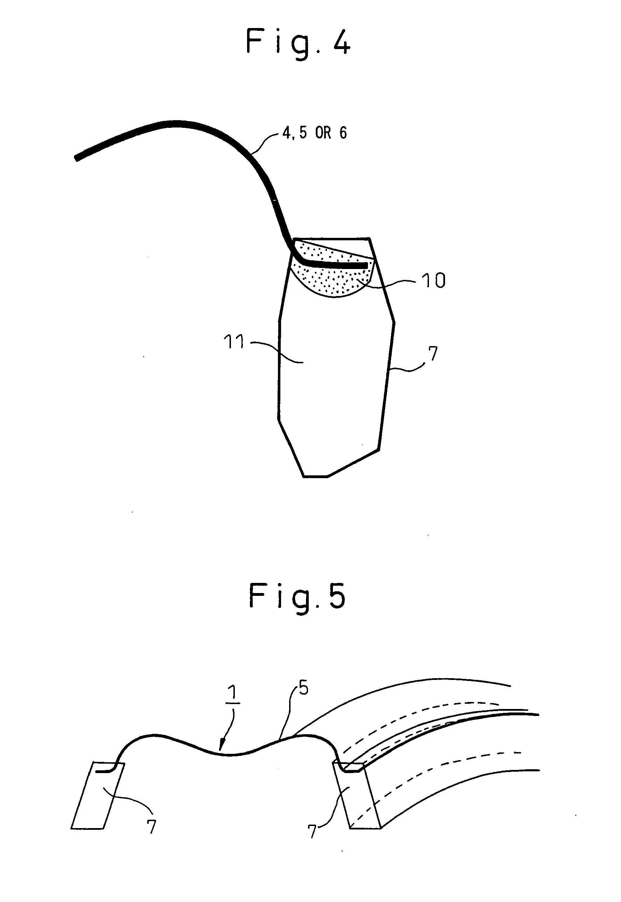

In order to improve the bondability between the rubbery elastic members 7 and the ring-shaped metal shell 4, 5 or 6 and simplify the work efficiency and to reduce the cost, for example, as shown in FIG. 4, the run flat support member of the tire wheel assembly according to the present invention forms the vicinity 10 of the bonding surfaces of the rubbery elastic members 7 with the ring-shaped metal shell 4, 5 or 6 by a directly bondable rubber composition including preferably 100 parts by weight of a diene-based rubber, 2 to 10 parts by weight of sulfur and 1 to 6 parts by weight of a resol-type alkyl phenol resin. Here, as the diene-based rubber, general use rubbers such as natural rubber, polyisoprene rubber, styrene-butadiene copolymer rubber, polybutadiene rubber, butyl rubber, chloroprene rubber, acrylonitrile-butadiene rubber may be used alone or as a blend thereof.

The sulfur, which is the essential ingredients of the directly bondable rubber composition used in the present invention, is any sulfur formulated, as a vulcanization agent, into a tire or other rubber composition in the past in an amount of preferably 2 to 10 parts by weight, based upon 100 parts by weight of rubber, more preferably 3 to 6 parts by weight. If the amount is too small, the desired rubber-metal bonding strength cannot be obtained, while conversely if too large, the aged physical properties of the rubber is decreased.

In the present invention, to enable the ring-shaped metal shell and the rubbery elastic members to be directly bonded, a resol-type phenol resin is further formulated in an amount of preferably 1 to 6 parts by weight, more preferably 2 to 5 parts by weight, based upon 100 parts by weight of the diene-based rubber. If the amount is too small, the desired bonding strength cannot be obtained sufficiently, while conversely if too large, scorching easily occurs at the time of processing the rubber.

The resol-type alkyl phenol resin usable in the present invention is a known material. Specifically, it is commercially available from Hitachi Chemical as Hitanol 2501Y etc.

In a preferable embodiment of the present invention, as the above-mentioned directly bondable rubber composition, from the viewpoint of further promoting the reaction at the bonding interface, a cobalt salt of an organic acid is formulated therein, in an amount of, preferably 0.1 to 1 part by weight, more preferably 0.2 to 0.4 part, in terms of a cobalt element, based upon 100 parts by weight of the diene-based rubber. If the amount of the cobalt salt of an organic acid is too small, the desired effect by the increase of the bonding strength is not sufficiently obtained. Conversely, if too large, the cobalt promotes aging of the rubber. As such cobalt salt of an organic acid, specifically cobalt naphthenate, cobalt boroneodecanoate, cobalt stearate, cobalt rosinate, cobalt acetyl acetonate, etc. may be mentioned. Among these, cobalt acetyl acetonate is preferably used.

According to a preferable embodiment of the present invention and from the viewpoint of improvement in the resistance to heat degradation, the directly bondable rubber composition preferably contains, based upon 100 parts by weight of the diene-based rubber, as a reinforcing filler, carbon black/silica in a weight ratio of 10/1 to 1/2 and a total of 40 to 90 parts by weight and further contains, in the case of a silica formulation, a silane coupling agent 1 to 20% by weight, preferably 5 to 15% by weight, based upon the weight of the silica for securing sufficient bonding of the silica and the rubber. As the carbon black and the silica, the conventional carbon blacks and silicas may be used. Further, as the silane coupling agent, a conventional silane coupling agents may be used. Specifically, bis(3-triethoxysilylpropyl)tetrasulfide, bis(3-triethoxysilylpropyl)disulfide, etc. may be mentioned.

The rubbery elastic members according to the present invention, as schematically shown in FIG. 4, are structured as rubbery elastic members formed from two or more types of (or two or more layers of) rubber. Note that it is also possible to form the entire members with the above directly bondable rubber composition, but this would lead to increased cost and would, therefore, not be practical. For this reason, as shown in the example of FIG. 4, in the present invention, the rubber at the support ring is made a two-layer or more structure, the above high sulfur/resin formulation directly bondable rubber bonding with rubber is arranged at the locations contacting the metal shell, a general use rubber having superior resistance to heat degradation is arranged at the other locations, and both simplification of the production process and durability are realized. Due to this, the volume of the rubber having the high bonding characteristics is reduced, and, therefore, the cost of the support ring, as a whole, can be reduced and sticking of the rubber to the mold at the time of vulcanization can be suppressed.

As shown in FIG. 4, the directly bondable rubber composition is provided at the bonding locations of the rubbery elastic members and the ring-shaped metal shell. A general use rubber may be used for the other locations. The volume of the region 10 in the vicinity of the bonded parts is not limited. It is sufficient if it is one where the ring-shaped metal shell and the rubbery elastic members exhibit the desired bonding strength. Preferably, the directly bondable compound is provided at the bottom and top of the shell end, the top of the shell end is made a modified semi-circular cross-sectional shape, rubber is arranged in a range of 0.5 mm to 1.5 mm of the thickness of the thickest part, and rubber is arranged at 0.5 mm or more of the thickness of the thickest part of the bottom of the shell end (various cross-sectional shapes possible).

Note that the general use compound may be a conventional rubber having a superior resistant to heat degradation (high filler formulation and low sulfur formulation).

The method for fabricating the rubbery elastic members from the directly bondable rubber according to the present invention and the general use rubber is not particularly limited. For example, they may be fabricated by simultaneously extruding the directly bondable rubber with the general use rubber by a two-color extruder. Such rubbery elastic members and the ring-shaped metal shell can be bonded by, for example, molding the rubbery elastic members with the metal shell, then heat treating them inside the mold to directly bond the rubber and metal simultaneous with vulcanization of the rubber.

As shown in FIG. 5, the ring-shaped metal shell 5 and rubbery elastic members 7 forming the run flat support member 1 of the present invention have a strong bonding strength, but preferably the predetermined contact area is secured. The load at the time of the rim work or time of run flat driving is affected by the rim radius R (inch). When the contact area is S (cm²), the ratio S/R should be 4.5 cm²/inch or more, preferably 8 to 20 cm²/inch. Here, the "contact area" means the contact area between the metal and the rubbery elastic members at the end of one side of the ring-shaped metal shell 4, 5 or 6, that is, the entire contact area of one turn in the circumferential direction of the front/back surfaces and end faces of the metal shell where the ring-shaped metal shell 4, 5 or 6 contacts the rubbery elastic members 7 in the lateral cross-section perpendicularly intersecting the circumferential direction.

Further, the bonded surfaces of the ring-shaped metal shell 5 and the rubbery elastic members 7 should be formed in the axial direction and the radial direction. It is more preferable that the two be substantially equal. By this, a structure able to withstand both force in the axial direction and radial direction occurring at the time of run flat driving is formed.

In FIGS. 1, 2 and 3, the run flat support member 1, pneumatic tire 2 and rim 8 are formed coaxially in a ring about the shaft of the wheel (not shown). Note that the metal shell is not particularly limited in dimensions, but preferably the thickness is 0.5 to 3.0 mm and the width is substantially equal to the distance between the left and right tire bead toes.

The tire wheel assembly of the present invention is designed to support the weight of an automobile etc. through a punctured or other damaged tire, and, therefore, the ring-shaped metal shell 4, 5 or 6 is comprised of a metal material. As such a metal, iron, stainless steel, aluminum alloy, etc. may be mentioned.

As the rubber forming the parts of said rubbery elastic members other than the vicinity of the bonded surfaces with the ring-shaped metal shell, any general use rubber may be used so long as it can stably support the ring-shaped metal shell. For example, as the rubber, natural rubber, polyisoprene rubber, styrene-butadiene copolymer rubber, polybutadiene rubber, butyl rubber, etc. may be mentioned.

The rubber composition of the rubbery elastic members forming the run flat support member according to the present invention may contain, in addition to the essential ingredients, carbon black, silica, or another filler, a vulcanization or cross-linking agent, a vulcanization or cross-linking accelerator, various oils, an antioxidant, a plasticizer, or other various additives generally formulated for rubber use. The additives may be mixed and vulcanized by a general method to obtain a composition usable for vulcanization or cross-linking. The amounts of these additives can be made the conventional general amounts so far as the object of the present invention is not contravened.

### Examples

The present invention will now be further explained by Examples, but the present invention is by no means limited to these Examples.

### Examples 1 to 2 and Comparative Examples 1 to 3

### Preparation of Rubbery Elastic Member

Rubbery elastic members (i.e., dimensions: 5.5 mm thickness x 2.5 cm width x 8 cm length) having the formulations shown in Table I were prepared by mixing the ingredients, other than the vulcanization accelerator and sulfur, in a 2-liter internal mixer for 5 minutes until 150°C, then adding the vulcanization accelerator and sulfur were added thereto in the amounts shown in Table I and mixing the resultant mixture at 80°C for 3 minutes.

**Table I**

| | Rubber composition | Rubber composition | Rubber composition |
|---|---|---|---|
| | A | B | C |
| Formulation (wt. parts) | | | |
| RSS#3^{*1} | 100 | 100 | 100 |
| CB^{*2} | 70 | 70 | 50 |
| ZnO^{*3} | 5 | 5 | 5 |
| 6PPD^{*4} | 1 | 1 | 1 |
| Silica *5 | - | - | 20 |
| Si69^{*6} | - | - | 3 |
| Co (acac)^{*7} | - | 1 | 1 |
| Alkyl phenol resin ^{*8} | - | 5 | 5 |
| Sulfur ^{*9} | 1.5 | 5 | 5 |
| Vulcanization accelerator DZ^{*10} | 1.5 | - | - |

| | | | |
|---|---|---|---|
| Notes of Table I *1. Natural rubber *2. HAF grade carbon black (Seast N) manufactured by Tokai Carbon *3. Zinc oxide manufactured by Seido Chemical Industry *4. Antioxidant manufactured by Flexsys *5. Silica (Nipsil AQ) manufactured by Nippon Silica Industry *6. Silane coupling agent manufactured by Degussa *7. Cobalt acetyl acetonate (III) manufactured by Kishida Chemical *8. Alkyl phenol resin (Hitanol 2501Y) manufactured by Hitachi Chemical *9. Insoluble sulfur manufactured by Hitachi Chemical *10. Vulcanization accelerator (Noccelar DZ-G) manufactured by Ouchi Shinko Chemical Industries | | | |

Next, the rubber elastic members obtained from the rubber compositions A, B and C were used in the combinations shown in Table II with the rubbery elastic members bonded with metal plates manufactured by iron, instead of metal shells (150°C for 60 minutes). The durability of the run flat tire wheel assemblies thus obtained were decided by the test method shown below. The results are shown in Table II.

Note that the amounts of the rubber compositions A, B and C used shown in Table II are the total amounts of the rubber compositions used. Further, the amount of the adhesive in Comparative Example 1 was the amount, when coating the connection part with a primer and the adhesive one time each to the thicknesses of about 30 µm, while the amounts of use of the rubber compositions near the shells in Examples 1 and 2 were 5 to 20% of the total amounts of the rubber compositions used.

### Durability Test

A 2500 cc passenger car was fitted with the test tires and driven with the air pressure inside the front right tire set to 0 kPa and the air pressure inside the other three tires set to 200 kPa at 90 km/h until breakdown. The results are shown as indexed to the value of Comparative Example 1 as 100. The larger the numeral value, the better the durability.

**Table II**

| | Comp. 1 Ex. 1 | Comp. 2 Ex. 2 | Comp. 3 Ex. 3 | Example 1 | Example 2 |
|---|---|---|---|---|---|
| Rubber composition used | A | B | C | A (however, B near shell) | A (however, C near shell) |
| Adhesive ^{*1} | Yes | - | - | - | - |
| Durability (index) | 100 | 106 | 117 | 127 | 130 |

| | | | | | |
|---|---|---|---|---|---|
| *1: Adhesive Chemlock 200/205 manufactured by Lord Far East | | | | | |

### INDUSTRIAL APPLICABILITY

As explained above, bonding of a metal such as iron, stainless steel having a poor bondability with rubber and the rubbery elastic members is extremely difficult. Even if provisionally bonded, often the strength is insufficient or the long term durability is poor. However, according to the present invention, by using, for example, a diene-based rubber, sulfur and a resol-type alkyl phenol resin, it is possible to directly bond a metal and the rubber, without coating an organic solvent-based adhesive between the metal shell and the rubbery elastic members and the durability of the run flat support member is greatly improved.

### LIST OF REFERENCE NUMERALS

- 1: Run flat support member
- 2: Pneumatic tire
- 3: Cavity
- 4: Ring-shaped metal shell
- 5: Ring-shaped metal shell
- 6: Ring-shaped metal shell
- 7: Rubbery elastic members
- 8: Rim
- 9: Elastic ring
- 10: Directly metal bondable rubber composition
- 11: General use rubber

## Claims

1. A run flat tire wheel assembly comprising a run flat support member formed by a ring-shaped metal shell and rubbery elastic members in an inside cavity of a tire/rim, wherein the rubbery elastic members are comprised of at least two types of rubber differing at least at the vicinity of the bonded parts with the ring-shaped metal shell and at the other locations and wherein the vicinity of the bonded parts with the ring-shaped metal shell is formed with a directly bondable rubber elastic member.

2. A tire wheel assembly as claimed in claim 1, wherein said directly bondable rubber elastic member is composed of 100 parts by weight of a rubber composition containing a diene-based rubber, 2 to 10 parts by weight of sulfur and 1 to 6 parts by weight of a resol-type alkyl phenol resin.

3. A tire wheel assembly as claimed in claim 2, wherein the rubber composition forming the directly bondable rubber elastic members further contains 0.1 to 1 part by weight, based upon 100 parts by weight of the diene-based rubber, of a cobalt salt of an organic acid, in terms of a cobalt element.

4. A tire wheel assembly as claimed in claim 3, wherein the cobalt salt of an organic acid is cobalt acetyl acetonate.

5. A tire wheel assembly as claimed in any one of claims 2 to 4, wherein the rubber composition forming the directly bondable rubber elastic member includes, as a reinforcing filler, carbon black/silica in a weight ratio of 10/1 to 1/2 and a total of 40 to 90 parts by weight, based upon 100 parts by weight of the diene-based rubber and further includes 1 to 20% by weight, based upon the weight of the silica, of a silane coupling agent.

6. A tire wheel assembly as claimed in any one of claims 1 to 5, wherein the rubbery elastic members of the run flat support member are arranged between the ring-shaped metal shell and the rim as a structure for supporting the ring-shaped metal shell.

7. A tire wheel assembly as claimed in any one of claims 1 to 6, wherein said ring-shaped metal shell is made of iron or stainless steel.

8. A tire wheel assembly as claimed in any one of claims 1 to 7, wherein, when the nominal diameter of the tire is R (inch) and the area of the bonding surfaces of the rubbery elastic members/metal shell is S (cm²), the ratio S/R is 4.5 cm²/inch or more.

9. A tire wheel assembly as claimed in any one of claims 1 to 8, wherein the bonding surfaces are formed by the approximately axial direction surface and approximately diametrical direction surface.
